(19) Europäisches Patentamt
European Patent Office
Office européen des brevets

(11) **EP 4 068 042 B1**

(12) **EUROPEAN PATENT SPECIFICATION**

(45) Date of publication and mention
of the grant of the patent:
**20.09.2023 Bulletin 2023/38**

(21) Application number: **22163409.0**

(22) Date of filing: **22.03.2022**

(51) International Patent Classification (IPC):
**G05D 1/06** *(2006.01)*    **B64G 1/24** *(2006.01)*
**B64G 1/62** *(2006.01)*    **G05D 1/10** *(2006.01)*

(52) Cooperative Patent Classification (CPC):
**G05D 1/0676; B64G 1/242; B64G 1/244;
B64G 1/62; G05D 1/107**

(54) **RECOVERY CONTROL METHOD AND APPARATUS FOR ROCKET, ELECTRONIC DEVICE AND STORAGE MEDIUM**

VERFAHREN UND VORRICHTUNG ZUR STEUERUNG DER WIEDERHERSTELLUNG EINER RAKETE, ELEKTRONISCHE VORRICHTUNG UND SPEICHERMEDIUM

PROCÉDÉ DE COMMANDE DE RÉCUPÉRATION ET APPAREIL POUR FUSÉE, DISPOSITIF ÉLECTRONIQUE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2021 CN 202110310382**

(43) Date of publication of application:
**05.10.2022 Bulletin 2022/40**

(73) Proprietors:
• **Beijing Interstellar Glory Space
Technology Co., Ltd.
Beijing 100032 (CN)**
• **Beijing Interstellar Glory Technology LLC
Beijing 100176 (CN)**

(72) Inventors:
• **PENG, Xiaobo
Beijing 100032 (CN)**
• **ZHENG, Liwei
Beijing 100032 (CN)**
• **SHI, Jianbo
Beijing 100032 (CN)**

(74) Representative: **Schwarz & Partner Patentanwälte
GmbH
Patentanwälte
Wipplingerstraße 30
1010 Wien (AT)**

(56) References cited:
**WO-A1-2018/128612    US-A1- 2010 314 487
US-A1- 2018 044 035**

EP 4 068 042 B1

## Description

### Field

The present invention relates to the technical field of rockets, and in particular, to a recovery control method and apparatus for a rocket, an electronic device and a storage medium.

### Background

At present, traditional ballistic design of a carrier rocket only considers a process of launching from the ground into orbit, which is a process from inside of the atmospheric to outside of the atmospheric layer and from a low speed to a high speed, and after entering orbit, it does not consider recovery of the carrier rocket, and rocket debris falls freely and crashes under the effect of gravity. For a reusable carrier rocket, in addition to meeting load-into-orbit requirements, a sub-stage of the carrier rocket also needs to return to a landing site precisely from a high-altitude and high-speed state to achieve the recovery of the rocket for use. During a return process, it needs to overcome the harsh thermal-dynamic environment of atmospheric reentry, which is a completely new challenge for both the carrier rocket and the ballistic design. In addition, D1(US2010314487) disclosed technology for predicting and correcting a trajectory. The technology can create a model to predict a position of the reusable launch vehicle at a time in the future. D2 (WO2018128612) disclosed techniques for determination of a guided-munition orientation during flight based on lateral acceleration, velocity, and turn rate of the guided-munition. D3 (US2018/044035) disclosed a generally vertical rocket (2) flies generally horizontally into recovery line, cable or chain (3) suspended between towers (5, 7) of a catamaran landing ship (9). High speed winches (11, 13), preferably located near or at the tops of the towers (5, 7) can rapidly reel in or out the recovery line (3) to effectively raise or lower the recovery line (3).

### Summary

In view of this, an embodiment of the present invention provides a recovery control method for a rocket so that the rocket can precisely return to a landing site.

According to a first aspect, an embodiment of the present invention provides a recovery control method for a rocket, including:

> acquiring an airflow angle of attack and an airflow angle of sideslip;
> calculating an aerodynamic force according to the airflow angle of attack and the airflow angle of sideslip,
> acquiring a mass and an engine thrust of the rocket;
> determining a standard reference trajectory of the rocket by using the aerodynamic force, the engine thrust and the mass.

According to the recovery control method for a rocket provided in the embodiment of the present invention, by adding statistics of change rules of a wind field in a design process of a rocket returning and landing ballistic trajectory, a flight ballistic trajectory design value during a return process is closer to a real flight state, thereby ensuring that a guidance control method is more effective during the return process, and ensuring a greater probability of safe return of the recovered rocket to a landing site.

In conjunction with the first aspect, in a first implementation of the first aspect, calculating an aerodynamic force according to the airflow angle of attack and the airflow angle of sideslip includes:

> acquiring a dynamic pressure;
> acquiring a reference area of the rocket; and
> calculating the aerodynamic force of the rocket according to the airflow angle of attack, the airflow angle of sideslip, the dynamic pressure and the reference area.

In conjunction with the first aspect, in a second implementation of the first aspect, determining a standard reference trajectory of the rocket by using the aerodynamic force, the engine thrust and the mass includes:
inputting the aerodynamic force, the engine thrust and the mass into a preset particle dynamic equation to obtain the standard reference trajectory of the rocket.

In conjunction with the first aspect, in a first implementation of the first aspect, the particle dynamic equation is:

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V}_x \\ \dot{V}_y \\ \dot{V}_z \end{bmatrix} = \frac{\vec{F}_p}{m} = \frac{\vec{F}_{aero}}{m} + \vec{g} = \frac{1}{m} \begin{bmatrix} F_{px} \\ F_{py} \\ F_{pz} \end{bmatrix} + \frac{1}{m} \begin{bmatrix} F_{aerox} \\ F_{aeroy} \\ F_{aeroz} \end{bmatrix} + \begin{bmatrix} g_x \\ g_y \\ g_z \end{bmatrix}$$

where m is the mass of the rocket; Fp is the engine thrust; F$_{aero}$ is the aerodynamic force; and g is an earth attraction.

In conjunction with the first aspect, in a fourth implementation of the first aspect, after obtaining the standard reference trajectory, the method further includes:

controlling the rocket to return based on the standard reference trajectory.

In conjunction with the fourth implementation of the first aspect, in a fifth implementation of the first aspect, controlling the rocket to return and land based on the standard reference trajectory includes:

acquiring an actual flight position and an actual flight speed of the rocket;
determining a theoretical flight position and a theoretical flight speed of the rocket according to the standard reference trajectory;
calculating an attitude control parameter according to the actual flight position, the actual flight speed, the theoretical flight position, and the theoretical flight speed; and
controlling a flight attitude of the rocket according to the attitude control parameter.

In conjunction with the fifth implementation of the first aspect, in a sixth implementation of the first aspect, the attitude control parameter includes a pitch angle control amount Δcp and a yaw angle control amount Δψ, and calculating an attitude control parameter according to the actual flight position, the actual flight speed, the theoretical flight position, and the theoretical flight speed includes:

$$\Delta\varphi = K_x(x - xb) + K_{vx}(vx - vxb)$$

$$\Delta\psi = K_z(z - zb) + K_{vz}(vz - vzb)$$

where x represents an actual flight position of the rocket in an x direction; xb represents a theoretical flight position of the rocket in the x direction; vx represents an actual flight speed of the rocket in the x direction; vxb represents a theoretical flight speed of the rocket in the x direction; K$_x$ represents a gain factor for a flight position of the rocket in the x direction; and K$_{vx}$ represents a gain factor for a flight speed of the rocket in the x direction; z represents an actual flight position of the rocket in an z direction; zb represents a theoretical flight position of the rocket in the z direction; vz represents an actual flight speed of the rocket in the z direction; vzb represents a theoretical flight speed of the rocket in the z direction; K$_z$ represents a gain factor for a flight position of the rocket in the z direction; and K$_{vz}$ represents a gain factor for a flight speed of the rocket in the z direction.

According to a second aspect, an embodiment of the present invention provides a recovery control apparatus for a rocket, the apparatus including:

an acquisition module configured to acquire an airflow angle of attack and an airflow angle of sideslip; and
a calculation module configured to calculate an aerodynamic force according to the airflow angle of attack and the airflow angle of sideslip,
wherein the acquisition module is further configured to acquire a mass and an engine thrust of the rocket; and
a standard reference trajectory determination module configured to determine a standard reference trajectory of the rocket by using the aerodynamic force, the engine thrust and the mass.

According to a third aspect, an embodiment of the present invention provides an electronic device, including a memory and a processor, wherein the memory and the processor are communicatively connected to each other, and the memory stores computer instructions, which are executed by the processor to perform the recovery control method for a rocket in the first aspect or in any implementation of the first aspect.

According to a fourth aspect, an embodiment of the present invention provides a computer-readable storage medium, which stores computer instructions configured to cause a computer to perform the recovery control method for a rocket in the first aspect or in any implementation of the first aspect.

## Brief Description of the Drawings

Features and advantages of the present invention will be understood more clearly with reference to the accompanying drawings, which are illustrative and should not be understood as limiting the present invention. In the drawings:

Fig. 1 is a flow diagram of a recovery control method for a rocket in Embodiment 1 of the present invention;
Fig. 2 is a schematic diagram of angles of attack under a wind condition and under a no-wind condition in Embodiment 1 of the present invention;
Fig. 3 is a comparison diagram of a ballistic trajectory 1 designed with no wind field and a ballistic trajectory 2 designed while considering wind field compensation;
Fig. 4 is a flow diagram of a guidance control method for a rocket in Embodiment 1 of the present invention; and
Fig. 5 is a structural diagram of a recovery control apparatus for a rocket in Embodiment 2 of the present invention.

## Detailed Description of the Embodiments

To make the objects, technical solutions and advantages of the embodiments of the present invention clearer, a clear and complete description of the technical solutions in the embodiments of the present invention will be given below in conjunction with the drawings in the embodiments of the present invention. Obviously, the embodiments described are part of, but not all of, the embodiments of the present invention. All other embodiments obtained by those skilled in the art based on the embodiments in the present invention without creative work fall into the protection scope of the present invention.

After study, it was found that during design of a return ballistic trajectory, a wind field has a great influence on the ballistic trajectory, and if the influence of the wind field is not considered, it is difficult for a rocket to return to a landing site safely due to the actual influence of the wind field. In the recovery landing phase of the rocket, the trajectory of the rocket is approximately vertical if an initial deviation and the influence of wind are not considered, but according to the simulation effect, the approximation can only be used for qualitative analysis of thrust control regulating characteristics of the recovery ballistic trajectory, and if guidance control is performed based on this only, the deviation is large, resulting in a poor guidance control effect, so it is necessary to consider the influence of the actual wind field on a lateral displacement.

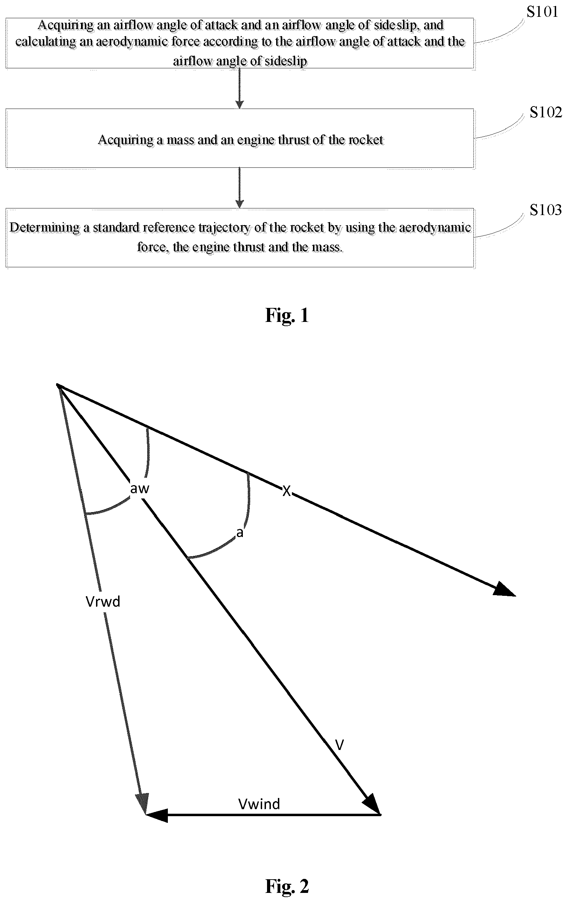

Based on this, Embodiment 1 of the present invention provides a recovery control method for a rocket. Fig. 1 is a flow diagram of the recovery control method for a rocket in Embodiment 1 of the present invention. As shown in Fig. 1, the recovery control method for a rocket in Embodiment 1 of the present invention includes the following steps:
S101: acquiring an airflow angle of attack and an airflow angle of sideslip, and calculating an aerodynamic force according to the airflow angle of attack and the airflow angle of sideslip.

As a specific implementation, the airflow angle of attack and airflow angle of sideslip may be calculated according to a speed vector and a rocket attitude, by using an algorithm which is specifically a general algorithm in the field, which will not be described here.

Specifically, in the absence of wind, the aerodynamic force $F_{aero} = f(\alpha, \beta, q, S_M)$, where $\alpha$ is the angle of attack, $\beta$ is the angle of sideslip, $q$ is a ground-speed-based dynamic pressure, and $S_M$ is a reference area of the rocket.

In the presence of wind, the aerodynamic force $F_{aero} = f(\alpha_w, \beta_W, q_w, S_M)$, where $\alpha_w$ is the airflow angle of attack, $\beta_w$ is the airflow angle of sideslip, $q_w$ is a wind-speed-based dynamic pressure, and $S_M$ is a reference area of the rocket.

It can be seen from the above description that calculating an aerodynamic force according to the airflow angle of attack and the airflow angle of sideslip may be implemented by the following technical solution: (1) acquiring a dynamic pressure; (2) acquiring a reference area of the rocket; and (3) calculating the aerodynamic force of the rocket according to the airflow angle of attack, the airflow angle of sideslip, the dynamic pressure and the reference area.

In Embodiment 1 of the present invention, the dynamic pressure in step (1) is the above-mentioned wind-speed-based dynamic pressure $q_w$.

It is to be noted that in Embodiment 1 of the present invention, calculating the aerodynamic force of the rocket according to the airflow angle of attack, the airflow angle of sideslip, the dynamic pressure and the reference area may be implemented by conventional technical means in the art, for example:

$$Faerox = Cx * q_w * \& Sm$$

$$Faeroy = Cy * q_w * Sm$$

$$Faeroz = Cz * q_w * Sm$$

where $F_{aerox}$ is an aerodynamic force in an x-direction, $F_{aeroy}$ is an aerodynamic force in a y-direction, $F_{aeroz}$ is an aerodynamic force in a z-direction, $C_x$ is an aerodynamic coefficient in the x-direction, $C_y$ is an aerodynamic coefficient in the y-direction, $C_z$ is an aerodynamic coefficient in the z-direction, $C_x$, $C_y$ and $C_z$ are related to rocket characteristics, $q_w$ is the wind-speed-based dynamic pressure, and $S_m$ is the reference rocket area of the rocket.

It is to be noted that the reference area of the rocket is an inherent characteristic parameter of the rocket, and the reference area is determined once the rocket design is completed.

Fig. 2 is a schematic diagram of angles of attack under a wind condition and under a no-wind condition in Embodiment 1 of the present invention. As shown in Fig. 2, X is axial attitude pointing of a rocket body in a longitudinal plane, V is a ground speed of the rocket body in the longitudinal plane (i.e., a plane determined by the speed vector and a rocket axis), Vwind is a wind speed of a wind field in the longitudinal plane, Vrwd is an air speed of the rocket body in the longitudinal plane, a is an angle of attack without considering the wind field, and aw is an angle of attack considering the wind field. It can be seen that the aerodynamic force on the rocket considering wind and the aerodynamic force on the rocket without considering wind are different.

S 102: acquiring a mass and an engine thrust of the rocket.

It is to be noted that in Embodiment 1 of the present invention, the mass of the rocket may be calculated in real time according to an engine flow integral; and the engine thrust is a design value and is a time-varying quantity known at the time of standard ballistic design.

S 103 : determining a standard reference trajectory of the rocket by using the aerodynamic force, the engine thrust and the mass.

As a specific implementation, determining a standard reference trajectory of the rocket by using the aerodynamic force, the engine thrust and the mass may be implemented by the following technical solution: inputting the aerodynamic force, the engine thrust and the mass into a preset particle dynamic equation to obtain the standard reference trajectory of the rocket. Specifically, the standard reference trajectory is a continuous trajectory that may be obtained by a single calculation.

Exemplarily, the particle dynamic equation of a rocket recovery process is as follows:

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V}_x \\ \dot{V}_y \\ \dot{V}_z \end{bmatrix} = \frac{\vec{F_p}}{m} = \frac{\vec{F_{aero}}}{m} + \vec{g} = \frac{1}{m}\begin{bmatrix} F_{px} \\ F_{py} \\ F_{pz} \end{bmatrix} + \frac{1}{m}\begin{bmatrix} F_{aerox} \\ F_{aeroy} \\ F_{aeroz} \end{bmatrix} + \begin{bmatrix} g_x \\ g_y \\ g_z \end{bmatrix}$$

where m is the mass of the rocket; Fp is the engine thrust; $F_{aero}$ is the aerodynamic force; and g is an earth attraction, which may be approximately constant in the landing phase.

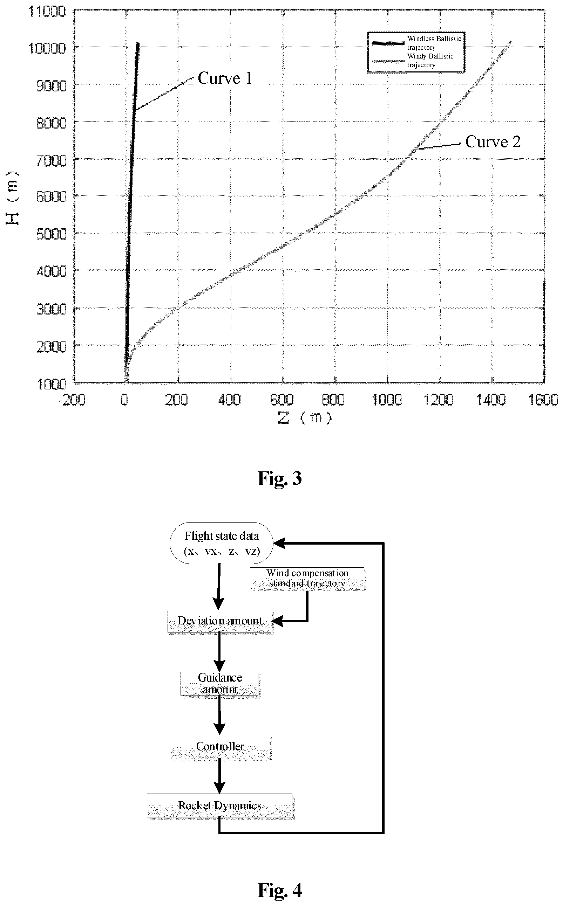

Fig. 3 is a comparison diagram of a ballistic trajectory 1 designed with no wind field and a ballistic trajectory 2 designed while considering wind field compensation. As shown in Fig. 3, a curve 1 is the ballistic trajectory 1 designed with no wind, and a curve 2 is the ballistic trajectory 2 designed while considering wind field compensation (i.e., a ballistic trajectory designed using steps S101-S103 of Embodiment 1 of the present invention). As shown in Fig. 3, a lateral trajectory distance between the ballistic trajectory 1 and ballistic trajectory 2 is more than 1 km in an actual wind field situation. If the wind field is not considered in the ballistic design of the rocket recovery process, to achieve recovery of the rocket, the deviation (i.e., the deviation of 1 km due to the wind field) needs to be included within an adjustment capability range of a guidance system, which greatly increases the difficulty of the guidance system design, and if the wind field is considered, the system deviation will be reduced by about 1 km, which reduces the pressure on the guidance system design. It is to be noted that the 1km here is for a specific rocket, and the value is different for different rockets.

It can be seen that according to the recovery control method for a rocket provided in Embodiment 1 of the present invention, by adding change rules of a wind field in a design process of a returning and landing ballistic trajectory, a flight ballistic trajectory design value during a return process is closer to a real flight state, thereby ensuring that a guidance control method is more effective during the return process, and ensuring a greater probability of safe return of the recovered rocket to a landing site. In other words, since wind field correction is considered, the guidance deviation is small, and the landing precision is higher.

Fig. 4 is a flow diagram of a guidance control method for a rocket in Embodiment 1 of the present invention. As shown in Fig. 4, after step S 103 of determining a standard reference trajectory of the rocket by using the aerodynamic force, the engine thrust and the mass, the method further includes: controlling the rocket to return and land based on the standard reference trajectory. In other words, guidance control is performed during returning and landing of the rocket based on the standard reference trajectory, thereby ensuring a greater probability of safe return of the recovered rocket to a landing site.

Specifically, controlling the rocket to return and land based on the standard reference trajectory may be implemented by the following technical solution: acquiring an actual flight position and an actual flight speed of the rocket (equivalent to flight state data in Fig. 4); acquiring the standard reference trajectory of the rocket (equivalent to a wind compensation standard trajectory in Fig. 4), and determining a theoretical flight position and a theoretical flight speed of the rocket according to the standard reference trajectory; calculating an attitude control parameter (equivalent to a deviation amount in Fig. 4) according to the actual flight position, the actual flight speed, the theoretical flight position, and the theoretical flight speed; and controlling a flight attitude of the rocket according to the attitude control parameter. Specifically, a guidance amount may be calculated from the deviation amount to obtain rocket dynamics, i.e., mathematical description of the real flight state of the rocket.

Exemplarily, the attitude control parameter includes a pitch angle control amount $\Delta\varphi$ and a yaw angle control amount $\Delta\psi$. Calculating an attitude control parameter according to the actual flight position, the actual flight speed, the theoretical flight position, and the theoretical flight speed may be implemented by the following technical solution:

$$\text{pitch angle control amount } \Delta\varphi = K_x(x - xb) + K_{vx}(vx - vxb)$$

$$\text{yaw angle control amount } \Delta\psi = K_z(z - zb) + K_{vz}(vz - vzb)$$

where $x$ represents an actual flight position of the rocket in an $x$ direction; $xb$ represents a theoretical flight position of the rocket in the $x$ direction; $vx$ represents an actual flight speed of the rocket in the $x$ direction; $vxb$ represents a theoretical flight speed of the rocket in the $x$ direction; $K_x$ represents a gain factor for a flight position of the rocket in the $x$ direction; and $K_{vx}$ represents a gain factor for a flight speed of the rocket in the $x$ direction; $z$ represents an actual flight position of the rocket in an $z$ direction; $zb$ represents a theoretical flight position of the rocket in the $z$ direction; $vz$ represents an actual flight speed of the rocket in the $z$ direction; $vzb$ represents a theoretical flight speed of the rocket in the $z$ direction; $K_z$ represents a gain factor for a flight position of the rocket in the $z$ direction; and $K_{vz}$ represents a gain factor for a flight speed of the rocket in the $z$ direction.

In other words, on the basis of designing the standard reference trajectory considering wind compensation, a deviation control calculation method is proposed, and return control variables are calculated as attitude control inputs to perform guidance loop calculation and control.

The recovery control method for a rocket provided in Embodiment 1 of the present invention can reduce the difficulty of a guidance control system in the returning and landing phase of the recovered rocket and improve the control performance and success rate of the recovery landing.

**Embodiment 2**

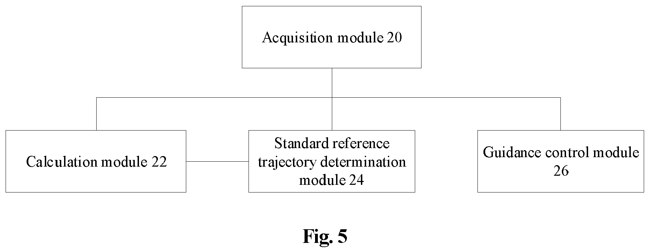

Corresponding to Embodiment 1 of the present invention, Embodiment 2 of the present invention provides a recovery control apparatus for a rocket. Fig. 5 is a structural diagram of the recovery control apparatus for a rocket in Embodiment 2 of the present invention. As shown in Fig. 5, the recovery control apparatus for a rocket in Embodiment 2 of the present invention includes an acquisition module 20, a calculation module 22, and a standard reference trajectory determination module 24.

Specifically, the acquisition module 20 is configured to acquire an airflow angle of attack and an airflow angle of sideslip.

The calculation module 22 is configured to calculate an aerodynamic force according to the airflow angle of attack and the airflow angle of sideslip.

The acquisition module 22 is further configured to acquire a mass and an engine thrust of the rocket.

The standard reference trajectory determination module 24 is configured to determine a standard reference trajectory of the rocket by using the aerodynamic force, the engine thrust and the mass.

The recovery control apparatus for a rocket of Embodiment 2 of the present invention further includes a guidance control module 26. Specifically, the acquisition module 20 is further configured to acquire an actual flight position and an actual flight speed of the rocket; and the guidance control module 26 is configured to determine a theoretical flight position and a theoretical flight speed of the rocket according to the standard reference trajectory; calculate an attitude control parameter according to the actual flight position, the actual flight speed, the theoretical flight position, and the theoretical flight speed; and control a flight attitude of the rocket according to the attitude control parameter.

Specific details of the above-mentioned recovery control apparatus for a rocket may be understood by correspondingly referring to the corresponding related description and effects in the embodiments shown in Figs. 1 to 4, which will not be repeated here.

**Embodiment 3**

The embodiment of the present invention also provides an electronic device, which may include a processor and a memory, wherein the processor and the memory may be connected via a bus or by other means.

The processor may be a central processing unit (CPU). The processor may also be other general-purpose processor, a digital signal processor (DSP), an application specific integrated circuit (ASIC), a field-programmable gate array (FPGA), or other programmable logic device, a discrete gate or transistor logic device, a discrete hardware component or other chip, or a combination of the above-mentioned various types of chips.

The memory, as a non-transitory computer-readable storage medium, may be used to store non-transitory software programs, non-transitory computer executable programs and modules, such as program instructions/modules corresponding to the recovery control method for a rocket in embodiments of the present invention (such as the acquisition module 20, the calculation module 22, the standard reference trajectory determination module 24 and the guidance control module 26 shown in Fig. 5). The processor runs the non-transitory software programs, instructions and modules stored in the memory to execute various function applications of the processor and data processing, i.e., implementing the recovery control method for a rocket in the above method embodiments.

The memory may include a program storage area and a data storage area, wherein the program storage area may store an operating system and an application program required for at least one function; and the data storage area may store data created by the processor, and the like. In addition, the memory may include a high-speed random access memory, and may also include a non-transitory memory, such as at least one magnetic disk storage device, flash memory device, or other non-transitory solid-state storage device. In some embodiments, the memory optionally includes memories remotely provided from the processor, and these remote memories may be connected to the processor through a network. Examples of the network described above include, but are not limited to, the Internet, an intranet, a local area network, a mobile communication network and combinations thereof.

The one or more modules are stored in the memory, and when executed by the processor, execute the recovery control method for a rocket in the embodiments as shown in Figs. 1-4.

Specific details of the above-mentioned electronic device may be understood by correspondingly referring to the corresponding related description and effects in the embodiments shown in Figs. 1 to 5, which will not be repeated here.

Those skilled in the art can understand that all or part of the processes in the methods in the above embodiments may be implemented by relevant hardware instructed by a computer program, and the program may be stored in a computer-readable storage medium. The program, when executed, may include the processes of the above method embodiments. The storage medium may be a magnetic disk, an optical disk, a read-only ( ROM), a random access memory (RAM), a flash memory, a hard disk < HDD), a solid-state drive (SSD), or the like; and the storage medium may also include a combination of the aforementioned types of storage.

Although the embodiments of the present invention are described with reference to the accompanying drawings, those skilled in the art can make various modifications and variations without departing from the spirit and scope of the present invention, and such modifications and variations fall within the scope of the appended claims.

**Claims**

1. A recovery control method for a rocket, comprising:

acquiring an airflow angle of attack and an airflow angle of sideslip, and calculating an aerodynamic force according to the airflow angle of attack and the airflow angle of sideslip (S101);
acquiring a mass and an engine thrust of the rocket (S102); and
determining a standard reference trajectory of the rocket by using the aerodynamic force, the engine thrust and the mass (S103);
after obtaining the standard reference trajectory, the method further comprises: controlling the rocket to return based on the standard reference trajectory;
controlling the rocket to return and land based on the standard reference trajectory comprises:

acquiring an actual flight position and an actual flight speed of the rocket;
determining a theoretical flight position and a theoretical flight speed of the rocket according to the standard reference trajectory;
calculating an attitude control parameter according to the actual flight position, the actual flight speed, the theoretical flight position, and the theoretical flight speed; and
controlling a flight attitude of the rocket according to the attitude control parameter;
the attitude control parameter comprises a pitch angle control amount Δcp and a yaw angle control amount Δψ, and calculating an attitude control parameter according to the actual flight position, the actual flight speed, the theoretical flight position, and the theoretical flight speed comprises:

$$\Delta\varphi = K_x(x - xb) + K_{vx}(vx - vxb)$$

$$\Delta\psi = K_z(z\text{-}zb) + K_{vz}(vz\text{-}vzb),$$

where $x$ represents an actual flight position of the rocket in an $x$ direction; $xb$ represents a theoretical flight position of the rocket in the $x$ direction; $vx$ represents an actual flight speed of the rocket in the $x$ direction; $vxb$ represents a theoretical flight speed of the rocket in the $x$ direction; $K_x$ represents a gain factor for a flight position of the rocket in the $x$ direction; and $K_{vx}$ represents a gain factor for a flight speed of the rocket in the $x$ direction;
z represents an actual flight position of the rocket in an z direction; zb represents a theoretical flight position of the rocket in the z direction; vz represents an actual flight speed of the rocket in the z direction; vzb represents a theoretical flight speed of the rocket in the z direction; $K_z$ represents a gain factor for a flight position of the rocket in the z direction; and $K_{vz}$ represents a gain factor for a flight speed of the rocket in the z direction,
**characterized in that**,
the determining of a standard reference trajectory of the rocket by using the aerodynamic force, the engine thrust and the mass comprises:

inputting the aerodynamic force, the engine thrust and the mass into a preset particle dynamic equation to obtain the standard reference trajectory of the rocket,
wherein the particle dynamic equation is:

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V}_x \\ \dot{V}_y \\ \dot{V}_z \end{bmatrix} = \frac{\vec{F}_p}{m} = \frac{\vec{F}_{aero}}{m} + \vec{g} = \frac{1}{m}\begin{bmatrix} F_{px} \\ F_{py} \\ F_{pz} \end{bmatrix} + \frac{1}{m}\begin{bmatrix} F_{aerox} \\ F_{aeroy} \\ F_{aeroz} \end{bmatrix} + \begin{bmatrix} g_x \\ g_y \\ g_z \end{bmatrix}$$

where m is the mass of the rocket; Fp is the engine thrust; $F_{aero}$ is the aerodynamic force; and g is an earth attraction.

2. The method according to claim 1, **characterized in that**, calculating an aerodynamic force according to the airflow angle of attack and the airflow angle of sideslip comprises:

   acquiring a dynamic pressure;
   acquiring a reference area of the rocket; and
   calculating the aerodynamic force of the rocket according to the airflow angle of attack, the airflow angle of sideslip, the dynamic pressure and the reference area.

3. A recovery control apparatus for a rocket, comprising:

   an acquisition module configured to acquire an airflow angle of attack and an airflow angle of sideslip; and
   a calculation module configured to calculate an aerodynamic force according to the airflow angle of attack and the airflow angle of sideslip,
   wherein the acquisition module is further configured to acquire a mass and an engine thrust of the rocket; and
   a standard reference trajectory determination module configured to determine a standard reference trajectory of the rocket by using the aerodynamic force, the engine thrust and the mass;
   after obtaining the standard reference trajectory, the acquisition module is further configured to acquire an actual flight position and an actual flight speed of the rocket;
   a guidance control module configured to determine a theoretical flight position and a theoretical flight speed of the rocket according to the standard reference trajectory; calculate an attitude control parameter according to the actual flight position, the actual flight speed, the theoretical flight position, and the theoretical flight speed; and control a flight attitude of the rocket according to the attitude control parameter;
   the attitude control parameter comprises a pitch angle control amount Δcp and a yaw angle control amount Δψ, and the guidance control module is specifically configured to

$$\Delta\varphi = \mathrm{K}_x(x - xb) + \mathrm{K}_{vx}(vx - vxb)$$

$$\Delta\psi = \mathrm{K}_z(\text{z-zb}) + \mathrm{K}_{vz}(\text{vz-vzb}),$$

where $x$ represents an actual flight position of the rocket in an $x$ direction; $xb$ represents a theoretical flight position of the rocket in the $x$ direction; $vx$ represents an actual flight speed of the rocket in the $x$ direction; $vxb$ represents a theoretical flight speed of the rocket in the $x$ direction; $\mathrm{K}_x$ represents a gain factor for a flight position of the rocket in the $x$ direction; and $\mathrm{K}_{vx}$ represents a gain factor for a flight speed of the rocket in the $x$ direction; $z$ represents an actual flight position of the rocket in an $z$ direction; $zb$ represents a theoretical flight position of the rocket in the $z$ direction; $vz$ represents an actual flight speed of the rocket in the $z$ direction; $vzb$ represents a theoretical flight speed of the rocket in the $z$ direction; $\mathrm{K}_z$ represents a gain factor for a flight position of the rocket in the $z$ direction; and $\mathrm{K}_{vz}$ represents a gain factor for a flight speed of the rocket in the $z$ direction;
   **characterized in that**
   the determining of a standard reference trajectory of the rocket by using the aerodynamic force, the engine thrust and the mass comprises:

   inputting the aerodynamic force, the engine thrust and the mass into a preset particle dynamic equation to obtain the standard reference trajectory of the rocket,
   wherein the particle dynamic equation is:

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V}_x \\ \dot{V}_y \\ \dot{V}_z \end{bmatrix} = \frac{\vec{F}_p}{m} = \frac{\vec{F}_{aero}}{m} + \vec{g} = \frac{1}{m}\begin{bmatrix} F_{px} \\ F_{py} \\ F_{pz} \end{bmatrix} + \frac{1}{m}\begin{bmatrix} F_{aerox} \\ F_{aeroy} \\ F_{aeroz} \end{bmatrix} + \begin{bmatrix} g_x \\ g_y \\ g_z \end{bmatrix}$$

where m is the mass of the rocket; Fp is the engine thrust; $F_{aero}$ is the aerodynamic force; and g is an earth attraction.

4. An electronic device, **characterized in** comprising:
a memory and a processor communicatively connected to each other, wherein the memory stores computer instructions, which are executed by the processor to execute the recovery control method for a rocket according to claim 1 or 2.

5. A computer-readable storage medium, which stores computer instructions configured to cause a computer to execute the recovery control method for a rocket according to claim 1 or 2.

**Patentansprüche**

1. Verfahren zur Kontrollwiederherstellung für eine Rakete, umfassend:

Erfassen eines Luftanströmwinkels und eines Luftstromschiebewinkels und Berechnen einer aerodynamischen Kraft entsprechend dem Luftanströmwinkel und dem Luftstromschiebewinkel (S101);
Erfassen einer Masse und eines Triebwerkschubs der Rakete (S102); und
Bestimmen einer Standardreferenzflugbahn der Rakete unter Verwendung der aerodynamischen Kraft, des Triebwerkschubs und der Masse (S103);
nach dem Erhalten der Standardreferenzflugbahn umfasst das Verfahren ferner: Steuern der Rakete zur Rückkehr auf der Grundlage der Standardreferenzflugbahn;
wobei das Steuern der Rakete zum Zurückkehren und Landen auf der Grundlage der Standardreferenzflugbahn umfasst:

Erfassen einer tatsächlichen Flugposition und einer tatsächlichen Fluggeschwindigkeit der Rakete;
Bestimmen einer theoretischen Flugposition und einer theoretischen Fluggeschwindigkeit der Rakete entsprechend der Standardreferenzflugbahn;
Berechnen eines Lageregelungsparameters entsprechend der tatsächlichen Flugposition, der tatsächlichen Fluggeschwindigkeit, der theoretischen Flugposition und der theoretischen Fluggeschwindigkeit; und
Steuern einer Fluglage der Rakete entsprechend dem Lageregelungsparameter;
der Lageregelungsparameter umfasst einen Nickwinkel-Steuerungsbetrag $\Delta$cp und einen Gierwinkel-Steuerungsbetrag $\Delta\psi$, und das Berechnen eines Lageregelungsparameters entsprechend der tatsächlichen Flugposition, der tatsächlichen Fluggeschwindigkeit, der theoretischen Flugposition und der theoretischen Fluggeschwindigkeit umfasst:

$$\Delta\varphi = K_x(x - xb) + K_{vx}(vx - vxb)$$

$$\Delta\psi = K_z(z\text{-}zb) + K_{vz}(vz\text{-}vzb),$$

wobei *x* eine tatsächliche Flugposition der Rakete in einer *x*-Richtung darstellt; *xb* eine theoretische Flugposition der Rakete in der *x*-Richtung darstellt; *vx* eine tatsächliche Fluggeschwindigkeit der Rakete in der *x*-Richtung darstellt; *vxb* eine theoretische Fluggeschwindigkeit der Rakete in der *x*-Richtung darstellt; $K_x$ einen Verstärkungsfaktor für eine Flugposition der Rakete in der *x*-Richtung darstellt; und $K_{vx}$ einen Verstärkungsfaktor für eine Fluggeschwindigkeit der Rakete in der *x*-Richtung darstellt;

*z* eine tatsächliche Flugposition der Rakete in einer *z*-Richtung darstellt; *zb* eine theoretische Flugposition der Rakete in der *z*-Richtung darstellt; *vz* eine tatsächliche Fluggeschwindigkeit der Rakete in der *z*-Richtung darstellt; *vzb* eine theoretische Fluggeschwindigkeit der Rakete in der *z*-Richtung darstellt; $K_z$ einen Verstärkungsfaktor für eine Flugposition der Rakete in der *z*-Richtung darstellt; und $K_{vz}$ einen Verstärkungsfaktor für eine Fluggeschwindigkeit der Rakete in der *z*-Richtung darstellt,

**dadurch gekennzeichnet, dass**

das Bestimmen einer Standardreferenzflugbahn der Rakete durch Verwendung der aerodynamischen Kraft, des Triebwerkschubs und der Masse wie folgt umfasst:

Eingeben der aerodynamischen Kraft, des Triebwerkschubs und der Masse in eine zuvor festgelegte Teilchendynamikgleichung, um die Standardreferenzflugbahn der Rakete zu erhalten, wobei die Teilchendynamikgleichung wie folgt lautet:

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V}_x \\ \dot{V}_y \\ \dot{V}_z \end{bmatrix} = \frac{\vec{F}_p}{m} \frac{\vec{F}_{aero}}{m} + \vec{g} = \frac{1}{m}\begin{bmatrix} F_{px} \\ F_{py} \\ F_{pz} \end{bmatrix} + \frac{1}{m}\begin{bmatrix} F_{aerox} \\ F_{aeroy} \\ F_{aeroz} \end{bmatrix} + \begin{bmatrix} g_x \\ g_y \\ g_z \end{bmatrix}$$

wobei m die Masse der Rakete ist; Fp der Triebwerkschub ist; $F_{aero}$ die aerodynamische Kraft ist; und g eine Erdanziehung ist.

2. Verfahren gemäß Anspruch 1, **dadurch gekennzeichnet, dass** das Berechnen einer aerodynamischen Kraft entsprechend dem Luftanströmwinkel und dem Luftstromschiebewinkel wie folgt umfasst:

Erfassen eines dynamischen Drucks;
Erfassen einer Referenzfläche der Rakete; und
Berechnen der aerodynamischen Kraft der Rakete entsprechend dem Luftanströmwinkel, dem Luftstromschiebewinkel, dem dynamischen Druck und der Referenzfläche.

3. Vorrichtung zur Kontrollwiederherstellung für eine Rakete, umfassend:

ein Erfassungsmodul, das dazu ausgelegt ist, einen Luftanströmwinkel und einen Luftstromschiebewinkel zu erfassen; und
ein Berechnungsmodul, das dazu ausgelegt ist, eine aerodynamische Kraft entsprechend dem Luftanströmwinkel und dem Luftstromschiebewinkel zu berechnen,
wobei das Erfassungsmodul ferner dazu ausgelegt ist, eine Masse und einen Triebwerkschub der Rakete zu erfassen; und
ein Standardreferenzflugbahnbestimmungsmodul, das dazu ausgelegt ist ist, eine Standardreferenzflugbahn der Rakete durch Verwendung der aerodynamischen Kraft, des Triebwerkschubs und der Masse zu bestimmen;
nach dem Erhalten der Standardreferenzflugbhan ist das Erfassungsmodul weiter dazu ausgelegt, eine tatsächliche Flugposition und eine tatsächliche Fluggeschwindigkeit der Rakete zu erfassen;
ein Führungssteuerungsmodul, das dazu ausgelegt ist, eine theoretische Flugposition und eine theoretische Fluggeschwindigkeit der Rakete entsprechend der Standardreferenzflugbahn zu bestimmen; einen Lageregelungsparameter êntsprechend der tatsächlichen Flugposition, der tatsächlichen Fluggeschwindigkeit, der theoretischen Flugposition und der theoretischen Fluggeschwindigkeit zu berechnen; und eine Fluglage der Rakete entsprechend dem Fluglageregelungsparameter zu steuern;

der Lageregelungsparameter einen Nickwinkel-Steuerungsbetrag $\Delta\phi$ und einen Gierwinkel-Steuerungsbetrag $\Delta\psi$ umfasst, und das Führungssteuerungsmodul speziell dazu ausgelegt ist,

$$\Delta\varphi = K_x(x - xb) + K_{vx}(vx - vxb)$$

$$\Delta\psi = K_z(z\text{-}zb) + K_{vz}(vz\text{-}vzb),$$

wobei x eine tatsächliche Flugposition der Rakete in einer *x*-Richtung darstellt; xb eine theoretische Flugposition der Rakete in der *x*-Richtung darstellt; *vx* eine tatsächliche Fluggeschwindigkeit der Rakete in der *x*-Richtung darstellt; *vxb* eine theoretische Fluggeschwindigkeit der Rakete in der *x*-Richtung darstellt; $K_x$ einen Verstärkungsfaktor für eine Flugposition der Rakete in der *x*-Richtung darstellt; und $K_{vx}$ einen Verstärkungsfaktor für eine Fluggeschwindigkeit der Rakete in der *x*-Richtung darstellt;

*z* eine tatsächliche Flugposition der Rakete in einer *z*-Richtung darstellt; *zb* eine theoretische Flugposition der Rakete in der *z*-Richtung darstellt; *vz* eine tatsächliche Fluggeschwindigkeit der Rakete in der *z*-Richtung darstellt; *vzb* eine theoretische Fluggeschwindigkeit der Rakete in der *z*-Richtung darstellt; $K_z$ einen Verstärkungsfaktor für eine Flugposition der Rakete in der *z*-Richtung darstellt; und $K_{vz}$ einen Verstärkungsfaktor für eine Fluggeschwindigkeit der Rakete in der *z*-Richtung darstellt,

**dadurch gekennzeichnet, dass**

das Bestimmen einer Standardreferenzflugbahn der Rakete durch Verwendung der aerodynamischen Kraft, des Triebwerkschubs und der Masse wie folgt umfasst:

Eingeben der aerodynamischen Kraft, des Triebwerkschubs und der Masse in eine zuvor festgelegte Teilchendynamikgleichung, um die Standardreferenzflugbahn der Rakete zu erhalten, wobei die Teilchendynamikgleichung wie folgt lautet:

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V}_x \\ \dot{V}_y \\ \dot{V}_z \end{bmatrix} = \frac{\vec{F}_p}{m} \frac{\vec{F}_{aero}}{m} + \vec{g} = \frac{1}{m}\begin{bmatrix} F_{px} \\ F_{py} \\ F_{pz} \end{bmatrix} + \frac{1}{m}\begin{bmatrix} F_{aerox} \\ F_{aeroy} \\ F_{aeroz} \end{bmatrix} + \begin{bmatrix} g_x \\ g_y \\ g_z \end{bmatrix}$$

wobei m die Masse der Rakete ist; Fp der Triebwerkschub ist; $F_{aero}$ die aerodynamische Kraft ist; und g eine Erdanziehung ist.

4. Elektronische Vorrichtung, **dadurch gekennzeichnet, dass** sie umfasst:
einen Speicher und einen Prozessor, die kommunikativ miteinander verbunden sind, wobei der Speicher Computerbefehle speichert, die von dem Prozessor ausgeführt werden, um das Verfahren zur Kontrollwiederherstellung für eine Rakete gemäß einem der Ansprüche 1 oder 2 auszuführen.

5. Computerlesbares Speichermedium, das Computerbefehle speichert, die so ausgelegt sind, dass sie einen Computer veranlassen, das Verfahren zur Kontrollwiederherstellung für eine Rakete gemäß einem der Ansprüche 1 oder 2 auszuführen.

**Revendications**

1. Procédé de commande de récupération pour une fusée, comprenant les étapes consistant à :

    acquérir un angle d'attaque d'écoulement d'air et un angle de dérapage d'écoulement d'air, et calculer une force aérodynamique en fonction de l'angle d'attaque d'écoulement d'air et de l'angle de dérapage d'écoulement d'air (S101) ;
    acquérir une masse et une poussée de moteur de la fusée (S 102) ; et
    déterminer une trajectoire de référence standard de la fusée en utilisant la force aérodynamique, la poussée de moteur et la masse (S 103) ;
    après l'obtention de la trajectoire de référence standard, le procédé comprend en outre l'étape consistant à :

       commander un retour de la fusée sur la base de la trajectoire de référence standard ;
       la commande d'un retour et un atterrissage de la fusée sur la base de la trajectoire de référence standard comprend les étapes consistant à :

          acquérir une position de vol réelle et une vitesse de vol réelle de la fusée ;
          déterminer une position de vol théorique et une vitesse de vol théorique de la fusée selon la trajectoire de référence standard ;
          calculer un paramètre de commande d'attitude selon la position de vol réelle, la vitesse de vol réelle, la position de vol théorique et la vitesse de vol théorique ; et
          commander une attitude de vol de la fusée en fonction du paramètre de commande d'attitude ;
          le paramètre de commande d'attitude comprend une quantité de commande d'angle de tangage $\Delta\varphi$ et une quantité de commande d'angle de lacet $\Delta\psi$, et le calcul d'un paramètre de commande d'attitude en fonction de la position de vol réelle, de la vitesse de vol réelle, de la position de vol théorique et de la vitesse de vol théorique comprend :

$$\Delta\varphi = \mathrm{K}_x(x - xb) + \mathrm{K}_{vx}(vx - vxb)$$

$$\Delta\psi = \mathrm{K}_z(\mathrm{z\text{-}zb}) + \mathrm{K}_{vz}(\mathrm{vz\text{-}vzb}),$$

          où $x$ représente une position de vol réelle de la fusée dans une direction $x$ ; $xb$ représente une position de vol théorique de la fusée dans la direction $x$ ; $vx$ représente une vitesse de vol réelle de la fusée dans la direction $x$ ; $vxb$ représente une vitesse de vol théorique de la fusée dans la direction $x$ ; $\mathrm{K}_x$ représente un facteur de gain pour une position de vol de la fusée dans la direction $x$ ; et $\mathrm{K}_{vx}$ représente un facteur de gain pour une position de vol de la fusée dans la direction $x$ ; $z$ représente une position de vol réelle de la fusée dans une direction $z$ ; $zb$ représente une position de vol théorique de la fusée dans la direction $z$ ; $vz$ représente une vitesse de vol réelle de la fusée dans la direction $z$ ; $vzb$ représente une vitesse de vol théorique de la fusée dans la direction $z$ ; $\mathrm{K}_z$ représente un facteur de gain pour une position de vol de la fusée dans la direction $z$ ; et $\mathrm{K}_{vz}$ représente un facteur de gain pour une vitesse de vol de la fusée dans la direction $z$, **caractérisé en ce que**, la détermination d'une trajectoire de référence standard de la fusée en utilisant la force aérodynamique, la poussée de moteur et la masse comprend l'étape consistant à : entrer la force aérodynamique, la poussée de moteur et la masse dans une équation de dynamique des particules prédéfinie pour obtenir la trajectoire de référence standard de la fusée, dans lequel l'équation de dynamique des particules est :

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V_x} \\ \dot{V_y} \\ \dot{V_z} \end{bmatrix} = \frac{\vec{F_p}}{m} = \frac{\vec{F_{aero}}}{m} + \vec{g} = \frac{1}{m}\begin{bmatrix} F_{px} \\ F_{py} \\ F_{pz} \end{bmatrix} + \frac{1}{m}\begin{bmatrix} F_{aerox} \\ F_{aeroy} \\ F_{aeroz} \end{bmatrix} + \begin{bmatrix} g_x \\ g_y \\ g_z \end{bmatrix}$$

où m est la masse de la fusée ; Fp est la poussée de moteur ; $F_{aero}$ est la force aérodynamique ; et g est l'attraction terrestre.

**2.** Procédé selon la revendication 1, **caractérisé en ce que** le calcul d'une force aérodynamique en fonction de l'angle d'attaque d'écoulement d'air et de l'angle de dérapage d'écoulement d'air comprend les étapes consistant à : acquérir une pression dynamique ;

acquérir une zone de référence de la fusée ; et
calculer la force aérodynamique de la fusée en fonction de l'angle d'attaque d'écoulement d'air, de l'angle de dérapage d'écoulement, de la pression dynamique et de la zone de référence.

**3.** Appareil de commande de récupération pour une fusée, comprenant :

un module d'acquisition configuré pour acquérir un angle d'attaque d'écoulement d'air et un angle de dérapage d'écoulement d'air ; et
un module de calcul configuré pour calculer une force aérodynamique en fonction de l'angle d'attaque d'écoulement d'air et de l'angle de dérapage d'écoulement d'air,
dans lequel le module d'acquisition est en outre configuré pour acquérir une masse et une poussée de moteur de la fusée ; et
un module de détermination de trajectoire de référence standard configuré pour déterminer une trajectoire de référence standard de la fusée en utilisant la force aérodynamique, la poussée de moteur et la masse ;
après obtention de la trajectoire de référence standard, le module d'acquisition est en outre configuré pour acquérir une position de vol réelle et une vitesse de vol réelle de la fusée ;
un module de commande de guidage configuré pour déterminer une position de vol théorique et une vitesse de vol théorique de la fusée selon la trajectoire de référence standard ; calculer un paramètre de commande d'attitude selon la position de vol réelle, la vitesse de vol réelle, la position de vol théorique et la vitesse de vol théorique ; et commander une attitude de vol de la fusée selon le paramètre de commande d'attitude ;
le paramètre de commande d'attitude comprend une quantité de commande d'angle de tangage $\Delta\varphi$ et une quantité de commande d'angle de lacet $\Delta\psi$, et le module de commande de guidage est spécifiquement configuré pour

$$\Delta\varphi = K_x(x - xb) + K_{vx}(vx - vxb)$$

$$\Delta\psi = K_z(z\text{-}zb) + K_{vz}(vz\text{-}vzb),$$

où $x$ représente une position de vol réelle de la fusée dans une direction $x$ ; $xb$ représente une position de vol théorique de la fusée dans la direction $x$ ; $vx$ représente une vitesse de vol réelle de la fusée dans la direction $x$ ; $vxb$ représente une vitesse de vol théorique de la fusée dans la direction $x$ ; $K_x$ représente un facteur de gain pour une position de vol de la fusée dans la directions $x$ ; et $K_{vx}$ représente un facteur de gain pour une vitesse de vol de la fusée dans la direction $x$ ;
$z$ représente une position de vol réelle de la fusée dans une direction $z$ ; $zb$ représente une position de vol théorique de la fusée dans la direction $z$ ; $v_z$ représente une vitesse de vol réelle de la fusée dans la direction $z$ ; $vzb$ représente une vitesse de vol théorique de la fusée dans la direction $z$ ; $K_z$ représente un facteur de gain pour une position de vol de la fusée dans la direction $z$ ; et $K_{vz}$ représente un facteur de gain pour une vitesse de vol de la fusée dans la direction $z$ ;
**caractérisé en ce que**
la détermination d'une trajectoire de référence standard de la fusée en utilisant la force aérodynamique, la poussée de moteur et la masse comprend l'étape consistant à :

entrer la force aérodynamique, la poussée de moteur et la masse dans une équation de dynamique des particules prédéfinie pour obtenir la trajectoire de référence standard de la fusée,
dans lequel l'équation de dynamique des particules est :

$$\dot{\vec{r}} = \begin{bmatrix} \dot{x} \\ \dot{y} \\ \dot{z} \end{bmatrix} = \vec{V} = \begin{bmatrix} V_x \\ V_y \\ V_z \end{bmatrix}$$

$$\dot{\vec{V}} = \begin{bmatrix} \dot{V}_x \\ \dot{V}_y \\ \dot{V}_z \end{bmatrix} = \frac{\vec{F}_p}{m} = \frac{\vec{F}_{aero}}{m} + \vec{g} = \frac{1}{m}\begin{bmatrix} F_{px} \\ F_{py} \\ F_{pz} \end{bmatrix} + \frac{1}{m}\begin{bmatrix} F_{aerox} \\ F_{aeroy} \\ F_{aeroz} \end{bmatrix} + \begin{bmatrix} g_x \\ g_y \\ g_z \end{bmatrix}$$

où m est la masse de la fusée ; Fp est la poussée de moteur ; $F_{aero}$ est la force aérodynamique ; et g est l'attraction terrestre.

4. Dispositif électronique, **caractérisé en ce qu'**il comprend :
une mémoire et un processeur connectés en communication l'un avec l'autre, dans lequel la mémoire stocke des instructions informatiques, qui sont exécutées par le processeur pour exécuter le procédé de commande de récupération pour une fusée selon la revendication 1 ou 2.

5. Support de stockage lisible par ordinateur, qui stocke des instructions informatiques configurées pour amener un ordinateur à exécuter le procédé de commande de récupération pour une fusée selon la revendication 1 ou 2.

Acquiring an airflow angle of attack and an airflow angle of sideslip, and calculating an aerodynamic force according to the airflow angle of attack and the airflow angle of sideslip

S101

Acquiring a mass and an engine thrust of the rocket

S102

Determining a standard reference trajectory of the rocket by using the aerodynamic force, the engine thrust and the mass.

S103

**Fig. 1**

aw

X

a

Vrwd

V

Vwind

**Fig. 2**

**Fig. 3**

**Fig. 4**

Fig. 5

**EP 4 068 042 B1**

**Patent documents cited in the description**

- US 2010314487 A
- WO 2018128612 A
- US 2018044035 A